# EUROPÄISCHE PATENTSCHRIFT

(11) **EP 3 017 692 B1**
(45) Veröffentlichungstag und Bekanntmachung des Hinweises auf die Patenterteilung: **30.08.2017**
(21) Anmeldenummer: 15193126.8
(22) Anmeldetag: 05.11.2015
(51) Int. Cl.: A01K 5/02, A01K 1/10

(54) **FUTTERFÖRDERER**
FODDER PUSHER
POUSSOIR DU FOURRAGE

(30) Priorität: 07.11.2014 AT 508162014
(43) Veröffentlichungstag der Anmeldung: 11.05.2016
(73) Patentinhaber: Wasserbauer GmbH, 4595 Waldneukirchen (AT)
(72) Erfinder: Wasserbauer, Franz, 4595 Waldneukirchen (AT)
(74) Vertreter: KLIMENT & HENHAPEL

(56) Entgegenhaltungen:
- WO-A1-2014/033275
- DE-C1- 3 725 690
- US-A- 1 255 276
- US-A- 3 339 530

## Beschreibung

Die Erfindung bezieht sich auf einen Futterförderer mit einem fahrbaren Gehäuse und einem an einem Vorderteil des Gehäuses angeordneten Lagergehäuse, wobei im Lagergehäuse eine Förderschnecke mit einer quer zur Fahrtrichtung des fahrbaren Gehäuses orientierten Förderrichtung drehbar gelagert ist, die eine Schneckenwelle und ein auf der Schneckenwelle angeordnetes Schneckengewinde mit einer Kunststoffummantelung umfasst, gemäß dem Oberbegriff von Anspruch 1.

Futterförderer werden in der modernen Stalltechnik eingesetzt, um das lose im Futtergang bereitgestellte Futter wieder nahe an den Barren heranzuführen. Für diesen Zweck geeignete Vorrichtungen wurden etwa in der DE 3725690 C1 und der DE 299 13 549 U1 beschrieben. Das Vieh befindet sich auf der anderen Seite des Barrens, der aber ausreichend niedrig ausgeführt ist, um dem Vieh die Futteraufnahme zu ermöglichen. Das Futter muss jedoch ausreichend nahe beim Barren im Futtergang angeordnet sein und gelockert und gut gemischt dem Vieh angeboten werden. Hierfür sind selbsttätig auf dem Stallboden fahrende Futterförderer bekannt, die eine vorprogrammierte Fahrstrecke absolvieren und sich dabei etwa anhand von im Futtergang angeordneten Markierungsmagneten orientieren. Der Futterförderer fährt dabei den Futtergang nahe am Barren entlang und fördert das im Futtergang verstreute Futter mithilfe der Förderschnecke wieder nahe an den Barren. Im Gehäuse des Futterförderers sind der Radantrieb für die Räder und/oder Rollen des fahrbaren Gehäuses, der Schneckenantrieb für die Förderschnecke, Sensoren für die Markierungsmagneten, eine mit den Sensoren verbundene Steuereinrichtung für den Radantrieb und den Schneckenantrieb sowie eine in der Regel aufladbar ausgeführte Stromversorgung für alle vorgenannten Komponenten angeordnet.

Weitere landwirtschaftliche Vorrichtungen mit Förderschnecken wurden in der US 3,862,539 A, DE 1953007 U, US 3,073,100 A, WO 2014/033275 A1, US 1255276 A, US 3339530 A und der US 4,188,738 A beschrieben.

Herkömmliche Futterförderer weisen ferner ein an einem Vorderteil des Gehäuses angeordnetes Lagergehäuse auf, wobei im Lagergehäuse die Förderschnecke drehbar gelagert ist. Die Förderschnecke ist quer zur Fahrtrichtung des Futterförderers im Lagergehäuse angeordnet, wobei die Länge der Förderschnecke der Breite des Lagergehäuses im Wesentlichen entspricht und die Förderschnecke mit ihrem untersten Umfangsbereich knapp oberhalb der Aufstandsfläche des fahrbaren Gehäuses verläuft. Fährt der Futterförderer im Futtergang den Barren entlang, wird das Futter von der Förderschnecke über die Breite des Lagergehäuses aufgenommen, in Förderrichtung der Förderschnecke quer zur Fahrtrichtung in Richtung des Barrens versetzt und nahe am Barren ausgeworfen.

Die Förderschnecke umfasst eine Schneckenwelle und ein auf der Schneckenwelle angeordnetes Schneckengewinde. Die Schneckenwelle ist zumeist rohrförmig ausgeführt und trägt das Schneckengewinde, wobei die Schneckenwelle und das Schneckengewinde in herkömmlicher Weise aus einem metallischen Werkstoff gefertigt sind. Das Schneckengewinde ist in der Regel in Form eines an der Schneckenwelle angeschweißten Stahlbands ausgeführt. Diese Ausführung birgt im praktischen Einsatz erhöhte Verletzungsgefahr, falls die Bedienperson mit dem Fuß oder der Hand in das Schneckengewinde gerät, oder ein Tier während der Futteraufnahme mit seinem Kopf vom Schneckengewinde erfasst wird. Zudem neigt das Schneckengewinde im Laufe der Benutzung an seiner äußersten Gewindekante durch Abnutzung der Gewindeflanken zunehmend schärfer zu werden, wodurch die Verletzungsgefahr zunimmt.

Es ist somit das Ziel der Erfindung einen Futterförderer bereit zu stellen, der im Vergleich zu herkömmlichen Futterförderern verringerte Verletzungsgefahr birgt ohne die Förderleistung zu beeinträchtigen, sondern im Gegenteil die Förderleistung verbessert.

Dieses Ziel wird durch die Merkmale von Anspruch 1 erreicht. Anspruch 1 bezieht sich auf einen Futterförderer mit einem fahrbaren Gehäuse und einem an einem Vorderteil des Gehäuses angeordneten Lagergehäuse, wobei im Lagergehäuse eine Förderschnecke mit einer quer zur Fahrtrichtung des fahrbaren Gehäuses orientierten Förderrichtung drehbar gelagert ist, die eine Schneckenwelle und ein auf der Schneckenwelle angeordnetes Schneckengewinde mit einer Kunststoffummantelung umfasst. Erfindungsgemäß wird hierbei vorgeschlagen, dass die Kunststoffummantelung ein sägezahnartiges Gewindeprofil bildet. Als sägezahnartiges Gewinde wird dabei im Rahmen der vorliegenden Erfindung jedes Gewindeprofil verstanden, bei dem das Gewindeprofil in seinen von der Schneckenwelle am weitest entfernten Abschnitten im Vergleich zur vorderen und hinteren Gewindeflanke flach verläuft, also mit äußersten Flächenabschnitten des Gewindeprofils oder deren Tangentialebenen, die parallel zur Schneckenwellenachse oder mit geringem Winkel zur Schneckenwellenachse verlaufen. Die Kunststoffummantelung bildet dabei erfindungsgemäß eine der Förderrichtung zugewandte vordere Gewindeflanke, eine der Förderrichtung abgewandte hintere Gewindeflanke, sowie eine äußere Begrenzungsfläche des Schneckengewindes als Übergang zwischen der vorderen und der hinteren Gewindeflanke, wobei diese äußere Begrenzungsfläche oder deren Tangentialfläche parallel zur Schneckenwellenachse oder mit geringem Winkel zur Schneckenwellenachse verläuft.

Der erfindungsgemäße Aufbau des Schneckengewindes verfügt über mehrere Vorteile. Zunächst wird die Verletzungsgefahr verringert, da der erfindungsgemäße Kunststoffaufbau bereits aufgrund seiner Formgebung über weitaus geringeres Potential verfügt einer Bedienperson oder einem Tier Verletzungen zuzufügen als ein umlaufendes Stahlgewinde, da keine radial abstehenden Gewindespitzen mehr auftreten. Zudem werden mithilfe des erfindungsgemäßen Kunststoffaufbaus größere Gestaltungsmöglichkeiten hinsichtlich der Gewindeform ermöglicht, die somit leichter für die Futterförderung und die Förderleistung der Förderschnecke optimiert werden kann. So überlagern beispielsweise herkömmliche Förderschnecken die seitliche Schiebebewegung des Futters in axialer Richtung der Förderschnecke immer auch mit einer Umwälzbewegung. Letztere beeinträchtigt jedoch die Förderleistung des gattungsgemäßen Futterförderers. Das sägezahnartige Gewindeprofil gemäß der Erfindung verbessert die Förderleistung im vorliegenden Anwendungsfall, bei dem das Futter von der Förderschnecke vom Boden aufgenommen und seitlich verschoben werden muss. Die steile, im Wesentlichen senkrecht zur Achse der Schneckenwelle orientierte, vordere Gewindeflanke eines sägezahnartigen Gewindes verringert dabei die Umwälzbewegung des aufgenommenen Futters und verbessert die seitliche Schiebebewegung des aufgenommenen Futters in axialer Richtung der Schneckenwelle.

Eine vorteilhafte Ausführungsform sieht dabei vor, dass das sägezahnartige Gewindeprofil eine der Förderrichtung zugewandte vordere Gewindeflanke, eine der Förderrichtung abgewandte hintere Gewindeflanke, sowie eine zwischen der vorderen und der hinteren Gewindeflanke schraubenlinienförmig um die Schneckenwelle verlaufende, äußere Begrenzungsfläche aufweist, wobei die Begrenzungsfläche die vordere Gewindeflanke in Förderrichtung überragt. Aufgrund der die vordere Gewindeflanke überragenden Begrenzungsfläche wird ein in Förderrichtung nasenartig vorragender Vorsprung des Gewindeprofils geschaffen, der die Aufnahme des Futters vom Boden und somit die Förderleistung verbessert. Vorzugsweise wird dabei vorgeschlagen, dass die Erzeugende der äußeren Begrenzungsfläche schräg zur Schneckenwelle verläuft und sich insbesondere in Förderrichtung der Förderschnecke öffnet. Die Schrägstellung der Erzeugenden der Begrenzungsfläche relativ zur Schneckenwellenachse wird vorzugsweise in einem geringfügig spitzen Winkel gewählt, beispielsweise mit 20°.

Für die Verwirklichung einer erfindungsgemäß vorgesehenen Kunststoffummantelung gibt es unterschiedliche Möglichkeiten. Eine vorteilhafte Ausführungsform sieht etwa vor, dass die Kunststoffummantelung ein Gewindeinneres umhüllt, das als Kunststoffkern ausgeführt ist, wobei der Kunststoffkern eine geringere Dichte aufweist als die Kunststoffummantelung. Eine solche Ausführungsform ist etwa über ein Spritzgussverfahren leicht herstellbar. Die Schneckenwelle kann dabei in herkömmlicher Weise aus einem metallischen Werkstoff hergestellt werden und etwa als Blechtrommel ausgeführt sein. Der Kunststoffkern des Schneckengewindes kann im Zuge der Herstellung der Förderschnecke an die Blechtrommel angespritzt werden, wobei es sich als vorteilhaft erweist, vor dem Anspritzen die Mantelfläche der Blechtrommel etwa durch Sandstrahlverfahren aufzurauen, um eine bessere Anbindung des Schneckengewindes an die Blechtrommel zu erreichen. Der Kunststoffkern wird vorzugsweise aus einem geschäumten Kunststoff gebildet, etwa aus einem geschäumten Polyethylen. Die Kunststoffummantelung kann in weiterer Folge in einem Sprühvorgang gefertigt werden, indem ein geeigneter Kunststoff, beispielsweise Polyurethan, auf den Kunststoffkern aufgesprüht wird. Die Kunststoffummantelung bildet somit die vordere Gewindeflanke, eine der Förderrichtung abgewandte hintere Gewindeflanke, sowie eine äußere Begrenzungsfläche als Übergang zwischen der vorderen und der hinteren Gewindeflanke. Die Kunststoffummantelung ist aufgrund ihrer höheren Dichte widerstandsfähiger als der Kunststoffkern, weist aber dennoch im Vergleich zu herkömmlichen Stahlgewinden eine höhere Elastizität auf.

Um die Festigkeit bei einem solchen Aufbau zu erhöhen wird ferner vorgeschlagen, dass unterhalb der von der Kunststoffummantelung gebildeten, äußeren Begrenzungsfläche ein zwischen der Kunststoffummantelung und dem Kunststoffkern angeordnetes Kunststoffband verläuft. Dieses Kunststoffband kann etwa als Polyurethan-Streifen ausgeführt sein und wird bei einer Herstellung über ein Spritzgussverfahren vor dem Besprühen mit einer Kunststoffbeschichtung zur Herstellung der Kunststoffummantelung auf den Kunststoffkern aufgelegt. Alternativ zum Spritzgussverfahren ist es auch denkbar einen vorgefertigten Kunststoffkern auf die Schneckenwelle aufzukleben und anschließend mit oder ohne Verwendung eines aufgelegten Kunststoffbandes mit einem sprühfähigen und erhärtenden Kunststoff zur Herstellung der Kunststoffummantelung zu besprühen.

Es ist ferner vorstellbar, das erfindungsgemäße Schneckengewinde auch über Gießverfahren herzustellen, insbesondere mithilfe eines Schmelzkernverfahrens, bei dem im Inneren des Schneckengewindes ein Hohlraum verbleibt. Daher wird auch vorgeschlagen, dass die Kunststoffummantelung ein Gewindeinneres umhüllt, das als Hohlraum ausgeführt ist. Anstatt des Hohlraumes könnte aber auch ein entsprechend geeigneter Gießkern verwendet werden.

Die Erfindung wird im Folgenden anhand eines Ausführungsbeispiels mithilfe der beiliegenden Zeichnungen näher erläutert. Es zeigen hierbei die
Fig. 1 eine perspektivische Ansicht einer Ausführungsform eines erfindungsgemäßen Futterförderers von oben gesehen,
Fig. 2 eine perspektivische Ansicht der Ausführungsform gemäß Fig. 1 von unten gesehen,
Fig. 3 eine perspektivische Ansicht einer Ausführungsform einer erfindungsgemäßen Förderschnecke,
Fig. 4 eine weitere perspektivische Ansicht der Förderschnecke gemäß Fig. 3,
Fig. 5 eine Seitenansicht der Förderschnecke der Fig. 3 und 4, und die
Fig. 6 eine Schnittansicht durch die Förderschnecke gemäß der Schnittebene A-A der Fig. 5.

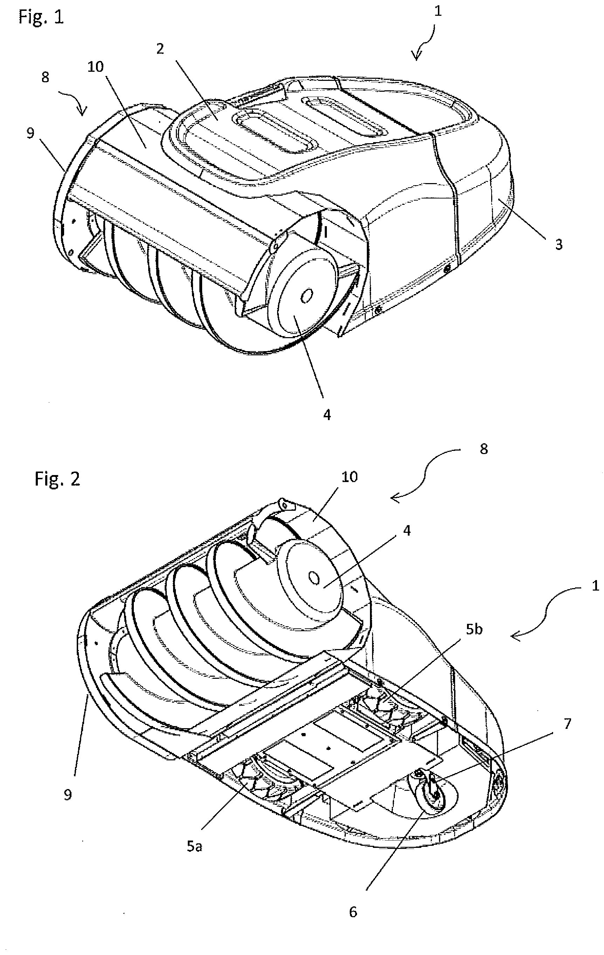

Zunächst wird auf die Fig. 1 und 2 Bezug genommen, die perspektivische Ansichten einer Ausführungsform eines erfindungsgemäßen Futterförderers von oben und unten gesehen zeigen. Der Futterförderer weist ein Gehäuse 1 mit einem Vorderteil 2 und einem Heckteil 3 auf. Im Inneren des Gehäuses 1 befinden sich der Radantrieb für die Räder 5 und/oder Rollen 6 des fahrbaren Gehäuses 1, der Schneckenantrieb für die Förderschnecke 4, sowie eine in der Regel aufladbar ausgeführte Stromversorgung für alle vorgenannten Komponenten. In der Fig. 2 sind die beiden Räder 5a, 5b ersichtlich sowie die Lenkrolle 6, mit denen sich das Gehäuse 1 etwa auf einem Stallboden fahrend bewegen kann. Freilich sind auch andere Ausführungen des Radantriebes denkbar. Die Lenkrolle 6 ist im Heckteil 3 angeordnet und über eine drehbare Aufhängung 7 befestigt. Durch unterschiedliche Drehstellungen der Aufhängung 7 und somit der Lenkrolle 6 können unterschiedliche Fahrrichtungen des Gehäuses 1 verwirklicht werden. Die Drehstellung der Lenkrolle 6 sowie die Drehgeschwindigkeit der Räder 5 werden über eine Steuereinrichtung (in den Fig. 1 bis 6 nicht ersichtlich) eingestellt, die wiederum mit Sensoren verbunden ist, die die Position des Gehäuses 1 relativ zu externen Signalgebern, etwa im Stallboden angeordnete Magnete, bestimmen, mit einem vorgegebenen Fahrweg vergleichen und entsprechende Steuersignale an die Räder 5 und die Lenkrolle 6 setzen um den vorgegebenen Fahrweg beizubehalten.

Die zur Stromversorgung der vorgenannten Komponenten erforderliche Betriebsspannung wird von vorzugsweise aufladbaren Batterien bereitgestellt. Die Steuereinrichtung erkennt dabei über eine Ladekontrolle den Ladezustand der Batterie und steuert rechtzeitig eine Ladestation an. Sobald der Futterförderer die Ladestation erreicht hat, koppelt er automatisch an die Ladestation und beginnt mit dem Ladezyklus. Nachdem ein ausreichender Ladezustand der Batterie erreicht wurde, steht der Futterförderer wieder für weitere Fahrten zur Verfügung. Die Steuereinrichtung ist vorzugsweise über eine drahtlose Datenverbindung mit einem externen Eingabegerät verbunden, über das eine bedienerfreundliche Programmierung und Überwachung der Steuereinrichtung vorgenommen werden kann.

An einem Vorderteil 2 des Gehäuses 1 ist ein Lagergehäuse 8 angeordnet, in dem die Förderschnecke 4 aufgenommen ist. Das Lagergehäuse 8 umfasst einen seitlichen Rahmenteil 9 sowie eine die Förderschnecke 4 über einen vorgegebenen Umfangsbereich konzentrisch umhüllende Abdeckung 10. Die Abdeckung 10 bildet mit dem seitlichen Rahmenteil 9 einen Aufnahme- und Förderraum für das von der Förderschnecke 4 erfasste Futter, wobei im gezeigten Ausführungsbeispiel das seitliche Rahmenteil 9 den Aufnahme- und Förderraum in axialer Richtung der Förderschnecke 4 einseitig begrenzt. Diese Seite der Förderschnecke 4 wird in weiterer Folge als Antriebsende bezeichnet. Das gegenüberliegende Ende der Förderschnecke 4 ist nicht durch einen seitlichen Rahmenteil begrenzt und somit als freies Abgabeende ausgeführt. Die Drehrichtung der Förderschnecke 4 ist dabei so gewählt, dass das Futter in Richtung des freien Abgabeendes der Förderschnecke transportiert und dort ausgeworfen wird.

Der Antriebsmotor für die Förderschnecke 4 befindet sich im Gehäuse 1 und ist über Antriebsmittel mit einer Antriebswelle der Förderschnecke 4 verbunden, wobei die Antriebsmittel im seitlichen Rahmenteil 9 verlaufen.

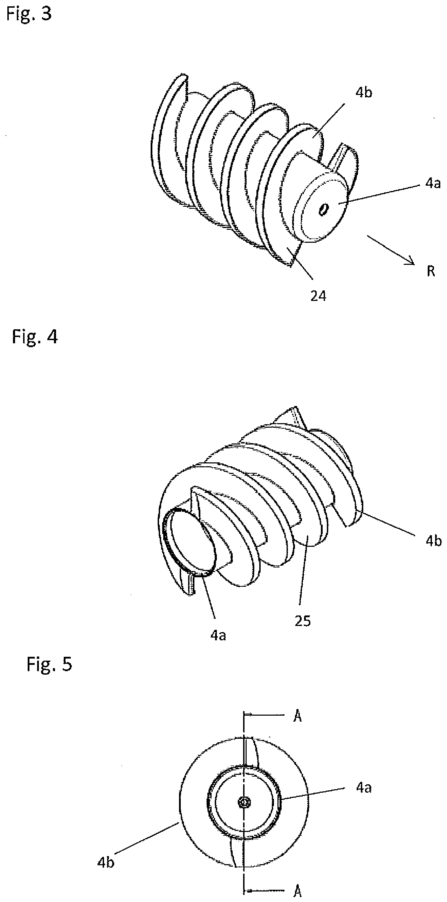

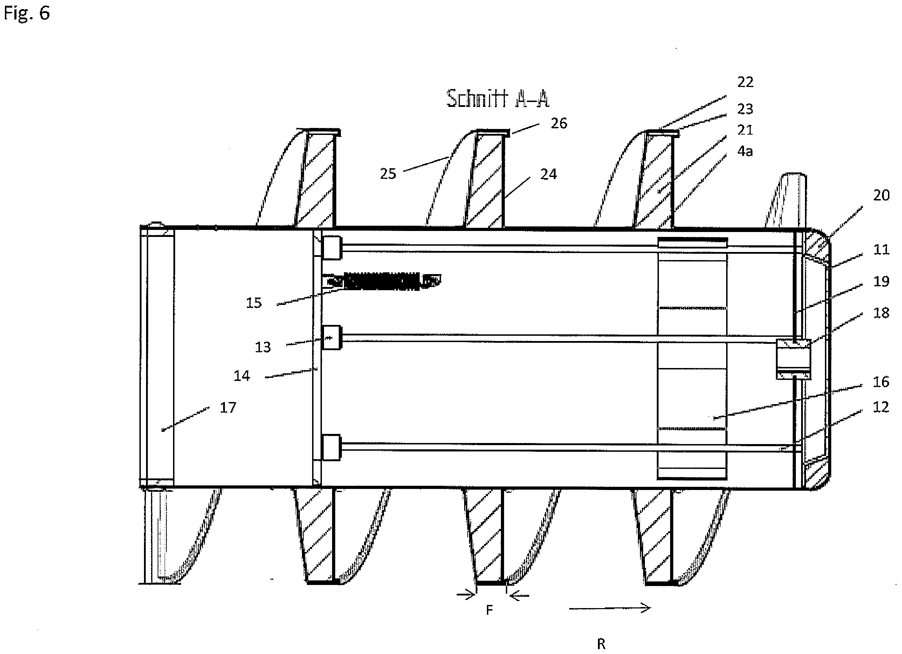

Anhand der Fig. 3 bis 6 wird in weiterer Folge der erfindungsgemäße Aufbau der Förderschnecke 4 erläutert. Die Förderschnecke 4 umfasst eine Schneckenwelle 4a und ein auf der Schneckenwelle 4a angeordnetes Schneckengewinde 4b. Die Schneckenwelle 4a ist trommelförmig aufgebaut und etwa aus einem Metallblech gefertigt. Am Antriebsende der Förderschnecke 4 ist die Schneckenwelle 4a mit einem Laufring 17 versehen, der auf ein zapfen- oder rohrförmiges Lager aufgeschoben werden kann. Die Antriebswelle (in den Fig. 1 bis 6 nicht ersichtlich) verläuft vom Antriebsende der Förderschnecke 4 im Inneren der Schneckenwelle 4a bis zur Nabe 18 (siehe Fig. 6), die über eine Lagerabdeckung 19 innerhalb der Schneckenwelle 4a gehalten ist. Die Antriebswelle wird in die Nabe 18 eingeschoben und setzt die Förderschnecke 4 in Rotation. Die Antriebswelle wird dabei von den im seitlichen Rahmenteil 9 verlaufenden Antriebsmitteln angetrieben.

Am freien Abgabeende der Förderschnecke 4 ist die Schneckenwelle 4a mit einer Sicherheitsabdeckung 11 versehen. Innerhalb der Schneckenwelle 4a verlaufen im gezeigten Ausführungsbeispiel Druckstangen 12, die an einem Ende an der Sicherheitsabdeckung 11 anliegen und an ihrem anderen Ende mithilfe von Lagerbuchsen 13 an einem Druckring 14 befestigt sind, wobei der Druckring 14 mithilfe einer Zugfeder 15 in Richtung der Sicherheitsabdeckung 11 gespannt wird. Am inneren Mantel der Schneckenwelle 4a können ferner Stabilisierungsbleche 16 für die Druckstangen 12 angeordnet sein, die mit den Druckstangen 12 verschweißt sind und mit ihnen einen korbartigen Aufbau bilden. Bei seitlichen Belastungen auf die Förderschnecke 4, die etwa vom Vieh ausgeübt werden, wird der Druckring 14 gegen die rückstellende Kraft der Zugfeder 15 bewegt und löst dabei einen elektrischen Impuls aus, der den Antrieb unverzüglich ausschaltet. Die Sicherheitsabdeckung 11 ist dabei im gezeigten Ausführungsbeispiel mit einem erhaben ausgeführten Mittelbereich und einem relativ zum Mittelbereich zurückversetzten Randbereich ausgeführt, wobei der Freiraum zwischen dem Randbereich und der Schneckenwelle 4a mit einer Kunststofffüllung 20 versehen ist.

Entlang der äußeren Mantelfläche der Schneckenwelle 4a verläuft das Schneckengewinde 4b, das im gezeigten Ausführungsbeispiel einen Schichtaufbau mit einem Kunststoffkern 21 und einer Kunststoffummantelung 22 aufweist, wobei die Kunststoffummantelung 22 die vordere Gewindeflanke 24, eine der Förderrichtung R abgewandte hintere Gewindeflanke 25, sowie eine zwischen der vorderen und der hinteren Gewindeflanke schraubenlinienförmig um die Schneckenwelle verlaufende, äußere Begrenzungsfläche F bildet. Der Kunststoffkern 21 weist eine geringere Dichte als die Kunststoffummantelung 22 auf und wird vorzugsweise aus einem geschäumten Kunststoff gebildet, etwa aus einem geschäumten Polyethylen oder einem geschäumten Polyurethan. Die Kunststoffummantelung 22 ist verschleißfest und elastisch ausgeführt und kann etwa aus Polyurethan gefertigt werden. Vorzugsweise verfügt sie auch über Lebensmitteltauglichkeit, da sie mit dem Futter für das Vieh in Berührung kommt. Das Schneckengewinde 4b kann im Zuge der Herstellung der Förderschnecke 4 an die metallisch ausgeführte Schneckenwelle 4a angespritzt werden, wobei es sich in diesem Fall als vorteilhaft erweist, vor dem Anspritzen die Mantelfläche der Schneckenwelle 4a etwa durch Sandstrahlverfahren aufzurauen, um eine bessere Anbindung des Schneckengewindes 4b an die Schneckenwelle 4a zu erreichen. Bei Gießverfahren erübrigt sich diese Vorgangsweise.

Das sägezahnartige Gewindeprofil weist eine der Förderrichtung R zugewandte vordere Gewindeflanke 24, eine der Förderrichtung R abgewandte hintere Gewindeflanke 25, sowie eine zwischen der vorderen und der hinteren Gewindeflanke 24, 25 schraubenlinienförmig um die Schneckenwelle 4a verlaufende, äußere Begrenzungsfläche F auf, wobei die Begrenzungsfläche F die vordere Gewindeflanke 24 in Förderrichtung R überragt. Aufgrund der die vordere Gewindeflanke 24 überragenden Begrenzungsfläche F wird ein nasenartig vorragender Vorsprung 26 des Gewindeprofils geschaffen, der wie erwähnt die Aufnahme des Futters vom Boden und somit die Förderleistung der Förderschnecke 4 verbessert. Hierbei ist es vorteilhaft, wenn die Erzeugende der äußeren Begrenzungsfläche F schräg zur Schneckenwelle 4a verläuft und sich insbesondere in Förderrichtung R der Förderschnecke 4 öffnet. Die Schrägstellung der Erzeugenden der Begrenzungsfläche F relativ zur Schneckenwellenachse wird vorzugsweise in einem geringfügig spitzen Winkel gewählt, beispielsweise mit 20°. In der Fig. 6 ist jedoch keine Schrägstellung der Erzeugenden der Begrenzungsfläche F ersichtlich, die somit parallel zur Achse der Schneckenwelle 4a verläuft.

Das Schneckengewinde 4b verfügt aufgrund seines erfindungsgemäßen Aufbaus nicht über das Verletzungspotential eines Stahlgewindes, da die Härte und das Drehmoment des umlaufenden Schneckengewindes 4b geringer sind. Der erfindungsgemäße Kunststoffaufbau ermöglicht auch größere Gestaltungsmöglichkeiten hinsichtlich der Gewindeform, ohne die Kosten und das Gewicht des Aufbaus nennenswert zu erhöhen. So ist es etwa leicht möglich die Flankenform des Schneckengewindes 4b so auszuführen, dass die Kunststoffummantelung 22 ein sägezahnartiges Gewindeprofil bildet. Radial abstehende Kanten und deren Nachschärfen im Zuge der Benutzung werden bei einer solchen Ausführungsform vermieden. Um die Festigkeit bei einem solchen Aufbau zu erhöhen wird im Rahmen einer Herstellung mithilfe von Spritzgussverfahren unterhalb der im äußersten Umfangsabschnitt des Schneckengewindes 4b verlaufenden Begrenzungsfläche F ein zwischen der Kunststoffummantelung 22 und dem Kunststoffkern 21 angeordnetes Kunststoffband 23 eingefügt. Dieses Kunststoffband 23 kann etwa als Polyurethan-Streifen ausgeführt sein.

Der erfindungsgemäße Aufbau des Schneckengewindes 4b verfügt über mehrere Vorteile. Zunächst wird die Verletzungsgefahr verringert, da der erfindungsgemäße Kunststoffaufbau über weitaus geringeres Potential verfügt einer Bedienperson oder einem Tier Verletzungen zuzufügen als ein umlaufendes Stahlgewinde. Zudem wird mithilfe des sägezahnartigen Gewindeprofils die Förderleistung der Förderschnecke 4 verbessert. Der erfindungsgemäße Futterförderer wirft dabei das Futter aufgelockert zum Futtertisch, wobei das Futter gleichzeitig vermischt wird, und hinterlässt einen sauberen Futtergang.

## Patentansprüche

1. Futterförderer mit einem fahrbaren Gehäuse (1) und einem an einem Vorderteil (2) des Gehäuses (1) angeordneten Lagergehäuse (8), wobei im Lagergehäuse (8) eine Förderschnecke (4) mit einer quer zur Fahrtrichtung des fahrbaren Gehäuses orientierten Förderrichtung (R) drehbar gelagert ist, die eine Schneckenwelle (4a) und ein auf der Schneckenwelle (4a) angeordnetes Schneckengewinde (4b) mit einer Kunststoffummantelung (22) umfasst, **dadurch gekennzeichnet, dass** die Kunststoffummantelung (22) ein sägezahnartiges Gewindeprofil bildet.

2. Futterförderer nach Anspruch 1, **dadurch gekennzeichnet, dass** das sägezahnartige Gewindeprofil eine der Förderrichtung (R) zugewandte vordere Gewindeflanke (24), eine der Förderrichtung (R) abgewandte hintere Gewindeflanke (25), sowie eine zwischen der vorderen und der hinteren Gewindeflanke (24, 25) schraubenlinienförmig um die Schneckenwelle (4a) verlaufende, äußere Begrenzungsfläche (F) aufweist, wobei die Begrenzungsfläche (F) die vordere Gewindeflanke (24) in Förderrichtung (R) überragt.

3. Futterförderer nach Anspruch 1 oder 2, **dadurch gekennzeichnet, dass** die Erzeugende der äußeren Begrenzungsfläche (F) schräg zur Schneckenwelle (4a) verläuft.

4. Futterförderer nach einem der Ansprüche 1 bis 3, **dadurch gekennzeichnet, dass** die Kunststoffummantelung (22) ein Gewindeinneres umhüllt, das als Kunststoffkern (21) ausgeführt ist, wobei der Kunststoffkern (21) eine geringere Dichte aufweist als die Kunststoffummantelung (22).

5. Futterförderer nach Anspruch 4, **dadurch gekennzeichnet, dass** der Kunststoffkern (21) aus einem geschäumten Kunststoff gebildet wird.

6. Futterförderer nach Anspruch 4 oder 5, **dadurch gekennzeichnet, dass** unterhalb der von der Kunststoffummantelung (22) gebildeten Begrenzungsfläche (F) ein zwischen der Kunststoffummantelung (22) und dem Kunststoffkern (21) angeordnetes Kunststoffband (23) verläuft.

7. Futterförderer nach einem der Ansprüche 1 bis 3, **dadurch gekennzeichnet, dass** die Kunststoffummantelung (22) ein Gewindeinneres umhüllt, das als Hohlraum ausgeführt ist.

## Claims

1. A feed conveyor, comprising a mobile housing (1) and a bearing housing (8) which is arranged on a front part (2) of the housing (1), wherein a worm conveyor (4), having a conveying direction (R) which is oriented transversely with respect to the direction of travel of the mobile housing, is rotatably mounted in the bearing housing (8), said worm conveyor (4) having a worm shaft (4a) and a worm thread (4b) which is arranged on the worm shaft (4a) and comprises a plastic sheathing (22), **characterized in that** plastic sheathing (22) forms a sawtooth-like threaded profile.

2. A feed conveyor according to claim 1, **characterized in that** the sawtooth-like threaded profile (24) comprises a front thread flank (24) facing the conveying direction (R), a rear thread flank (25) facing away from the conveying direction (R), as well as an outer boundary surface (F) which extends between the front and rear thread flanks (24, 25) in a helical manner about the worm shaft (4a), wherein the boundary surface (F) projects beyond the front thread flank (24) in the conveying direction (R).

3. A feed conveyor according to claim 1 or 2, **characterized in that** the generatrix of the outer boundary surface (F) runs obliquely with respect to the worm shaft (4a).

4. A feed conveyor according to one of claims 1 to 3, **characterized in that** the plastic sheathing (22) envelops a thread interior which is designed as a plastic core (21), wherein the plastic core (21) has a lower density than the plastic sheathing (22).

5. A feed conveyor according to claim 4, **characterized in that** the plastic core (21) is made from a foamed plastic.

6. A feed conveyor according to claim 4 or 5, **characterized in that** a plastic strip (23) arranged between the plastic sheathing (22) and the plastic core (21) extends below the boundary surface (F) formed by the plastic sheathing (22).

7. A feed conveyor according to one of claims 1 to 3, **characterized in that** the plastic sheathing (22) encases a thread interior, which is designed as a cavity.

## Revendications

1. Convoyeur à fourrage avec un caisson mobile (1) et un caisson de support (8) disposé sur une partie avant (2) du caisson (1), dans lequel est supportée avec possibilité de rotation dans le caisson de support (8) une vis de transport (4) dont le sens de transport (R) est transversal par rapport au sens de déplacement du caisson mobile et comprenant un arbre de vis (4a) et un pas de vis (4b) disposé sur l'arbre de vis (4a) et muni d'une enveloppe en plastique (22), **caractérisé en ce que** l'enveloppe en plastique (22) forme un profil de vis en dents de scie.

2. Convoyeur à fourrage selon la revendication 1, **caractérisé en ce que** le profil de vis en dents de scie présente un flanc de spire antérieur (24) tourné dans le sens de transport (R), un flanc de spire postérieur (25) tourné à l'opposé du sens de déplacement et une surface de délimitation extérieure (F) qui s'étend en hélice autour de l'arbre de vis (4a) entre les flancs de spire antérieur et postérieur (24, 25), la surface de délimitation (F) dépassant du flanc de spire antérieur (24) dans le sens de transport (R).

3. Convoyeur à fourrage selon la revendication 1 ou 2, **caractérisé en ce que** la génératrice de la surface de délimitation extérieure (F) est oblique par rapport à l'arbre de vis (4a).

4. Convoyeur à fourrage selon l'une des revendications 1 bis 3, **caractérisé en ce que** l'enveloppe en plastique (22) entoure un intérieur de la vis qui est réalisé comme un noyau en plastique (21), lequel noyau en plastique (21) a une densité inférieure à celle de l'enveloppe en plastique (22).

5. Convoyeur à fourrage selon la revendication 4, **caractérisé en ce que** le noyau en plastique (21) est formé d'un plastique moussé.

6. Convoyeur à fourrage selon la revendication 4 ou 5, **caractérisé en ce qu'**est prévu en dessous de la surface de délimitation (F) formée par l'enveloppe en plastique (22) une bande de plastique (23) disposée entre l'enveloppe en plastique (22) et le noyau en plastique (21).

7. Convoyeur à fourrage selon l'une des revendications 1 à 3, **caractérisé en ce que** l'enveloppe en plastique (22) entoure un intérieur de la vis qui est réalisé comme une espace creux.
